# EUROPEAN PATENT APPLICATION

(11) **EP 1 919 215 A1**
(43) Date of publication of application: **07.05.2008**
(21) Application number: 07113078.5
(22) Date of filing: 25.07.2007
(51) Int. Cl.: H04N 7/16, H04N 7/167

(54) **Playback lock method and image device thereof**

(30) Priority: 03.11.2006 KR 20060108137
(71) Applicant: Samsung Electronics Co., Ltd., Suwon-si, Gyeonggi-do 442-742 (KR)
(72) Inventor: KIM, Hee-jung, Yeongtong-gu, Suwon-si, Gyeonggi-do (KR)
(74) Representative: Perkins, Dawn Elizabeth

(57) **Abstract**

A playback lock method and an image device thereof are provided. The image device includes an image provider which provides an image, and a controller which locks a playback lock interval of the image provided from the image provider, which is set by a user, if it is determined that the playback lock interval is set. Accordingly, a user can manage and view the image more efficiently.

## Description

Apparatuses and methods consistent with the present invention relate to locking playback, and more particularly, to locking playback of an image to be played back.

Recently, image devices, such as televisions (TVs) or set-top boxes, generally comprise storage media which stores files, and accordingly, image devices can play back the files stored in the storage media therein.

Additionally, image devices may be connected to various external apparatuses, and thus it is possible to communicate between the image devices and the external apparatuses. Accordingly, image devices can also play back files stored in storage media which are installed in the external apparatuses.

Since images stored in the storage media may be played back regardless of the content of the images, images containing content which is deemed inappropriate for a third party, particularly children or teenagers, can be played back, causing problems to arise.

In order to prevent third parties from viewing images containing content which is deemed inappropriate to be viewed by third parties, the lock function can be set to obstruct playback of stored images. However, since a conventional lock function affects an entire stored image, the effectiveness of the lock function is reduced. In other words, if it is determined that a specific portion of a stored image contains offensive scenes, or an image in which private protection is needed, a user needs to set the lock function for the whole stored image in order to prevent the inappropriate image from being viewed.

Exemplary embodiments of the present invention may overcome the above disadvantages and other disadvantages not described above; however, the present invention is not required to overcome the disadvantages described above.

The present invention provides an image device and a method for controlling an image device not to display the image during the playback lock interval of an image to be played back, thus providing the user with the ability to efficiently manage and view the image.

In one exemplary embodiment of the present invention, there is provided an image device comprising an image provider which provides an image; and a controller which locks an interval of the image provided from the image provider, if it is determined that a user sets the interval to be a playback lock interval.

The controller may determine whether the playback lock interval of the image is set, based on information recorded in a file containing the image.

Additionally, the controller may generate a message advising that the playback lock interval is set, if it is determined that the playback lock is set.

The apparatus may further comprise an output unit which outputs the generated message advising that the playback lock interval is set.

The controller may control the playback lock interval of the image not to be displayed if a command is not input for a predetermined period of time or if the command does not correspond to a command to release the preset playback lock.

The input command may comprise password input.

Additionally, the controller may record a command to lock the playback lock interval of the image in one field of the file containing the image if the playback locking command is input.

The playback locking command may comprise input for at least one of the start point of the playback lock, the end point of the playback lock, and a password.

According to another aspect of the prevent invention, there is provided a method for locking playback, comprising determining whether a playback lock interval of an image to be played back is set by a user; and locking the image from being played back during the playback lock interval if it is determined that the playback lock interval of the image is set.

The determining may comprise determining whether the playback lock interval of the image is set, based on information recorded in a file containing the image to be played back.

The method may further comprise generating a message advising the playback lock interval is set, if it is determined that the playback lock is set.

The method may further comprise outputting the generated message advising the playback lock interval is set.

The locking may comprise controlling the playback lock interval of the image not to be displayed if a command is not input for a predetermined period of time or if the command does not correspond to a command to release the preset playback lock.

The input command may comprise password input.

The method may further comprise recording a command to lock the playback lock interval of the image in one field of the file containing the image if the playback locking command is input.

The playback locking command may comprise input for at least one of the start point of the playback lock, the end point of the playback lock, and a password.

The above and/or other aspects of the present invention will be more apparent by describing certain exemplary embodiments of the present invention with reference to the accompanying drawings, in which:
Figure 1 is a block diagram of an image device according to an exemplary embodiment of the present invention;
Figure 2 is a flowchart explaining a method for setting a playback lock interval of an image according to an exemplary embodiment of the present invention;
Figure 3 is a flowchart explaining a method for playing back the playback lock interval of the image of Figure 2;
Figure 4 is a block diagram of an image device according to another exemplary embodiment of the present invention; and
Figure 5 is a flowchart explaining a method for playing back a playback lock interval of an image according to another exemplary embodiment of the present invention.

Certain exemplary embodiments of the present invention will now be described in greater detail with reference to the accompanying drawings.

In the following description, same drawing reference numerals are used for the same elements in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

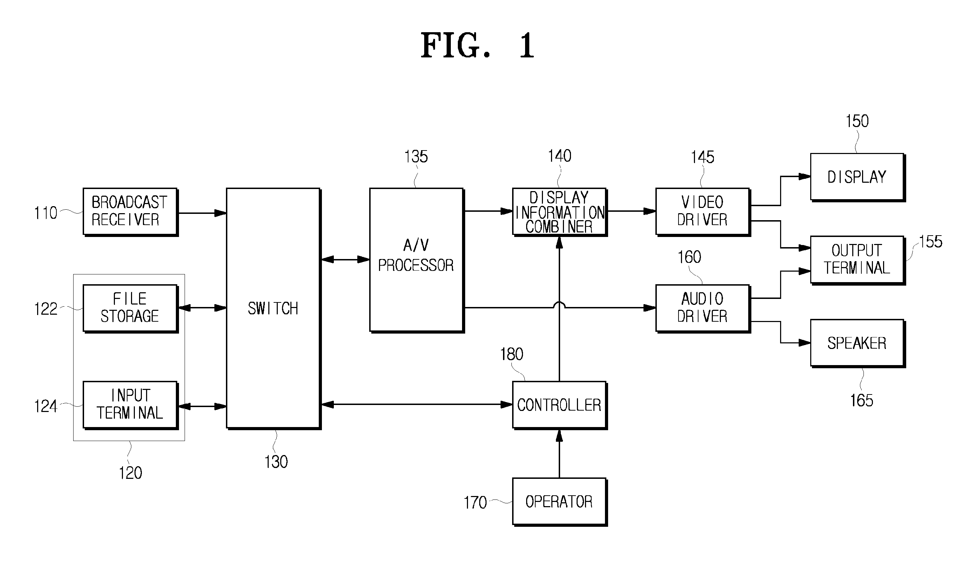

Figure 1 is a block diagram of an image device according to an exemplary embodiment of the present invention. As can be seen in Figure 1, the image device comprises a broadcast receiver 110, an image provider 120, a switch 130, an audio/video (A/V) processor 135, a display information combiner 140, an image driver 145, a display 150, an output terminal 155, an audio driver 160, a speaker 165, an operator 170, and a controller 180.

The broadcast receiver 110 tunes into a television (TV) broadcast and demodulates signals of the broadcast. The image provider 120 comprises a file storage 122 and an input terminal 124. The file storage 122 stores an image, or outputs a stored image. In the file storage 122, various recording media may be used as a means for storing the image, representative examples thereof being a hard disk drive (HDD), a flash memory, or other media.

The input terminal 124 provides a communication interface so as to be communicably connected to an external apparatus. Examples of the external apparatus connected to the input terminal 124 may include a personal computer (PC), a camera, a camcorder, a digital video disk (DVD) player, a portable multimedia player (PMP), a hard disk drive (HDD) player, and a memory card. However, as these external apparatuses are only examples, any apparatus comprising a recording medium which records an image may act as an external apparatus.

The switch 130 switches between outputs of the broadcast receiver 110 and the image provider 120 so as to send one of the outputs to the A/V processor 135 or the controller 180. The switching operation of the switch 130 is controlled by the controller 180.

The A/V processor 135 processes a video/audio signal selected by the switch 130 so that the signal can be played back. Additionally, the A/V processor 135 sends the video signal and the audio signal to the display information combiner 140 and the audio driver 160, respectively.

The display information combiner 140 combines display information, such as characters, symbols, figures and graphics, with the video output from the A/V processor 135. In this case, the display information combiner 140 can combine the display information by using an on screen display (OSD) method. The combining operation of the display information combiner 140 is controlled by the controller 180.

The image driver 145 displays the image combined with the display information output from the display information combiner 140 on the display 150, or transmits the output from the display information combiner 140 to another external apparatus (not shown) connected through the output terminal 155.

The audio driver 160 outputs the audio output from the A/V processor 135 through the speaker 165, or transmits the output from the A/V processor 135 to another external apparatus (not shown) connected through the output terminal 155.

The operator 170 may be provided integrally with or separately from the image device, and may receive operating commands from a user and transmit the commands to the controller 180. Additionally, the operator 170 may comprise a remote controller for a user to input the operating commands, and a light receiver which receives an output signal of the remote controller to transmit the signal to the controller 180.
Furthermore, the operator 170 may be implemented as a user interface through which a user can enter the commands using a menu screen.

The controller 180 controls the operation of the image device according to the operating commands of a user which are entered through the operator 170.

In particular, the controller 180 controls the image device to play back the image being stored in the image provider 120. Additionally, the controller 180 records "information on locked playback on an image" (hereinafter, referred to as "Playback Lock Setting") or a password in one field of the file containing the image in the image provider 120.

Moreover, if an image corresponding to the playback lock interval is played back, the controller 180 generates a message advising the playback lock interval is set, and controls the display information combiner 140 and display 145 to display the generated message. In addition, the controller 180 determines whether a number input through the operator 170 corresponds to the preset password, and if so, the whole image is played back regardless of whether the image contains the playback lock interval or not. However, if the input number does not correspond to the preset password, the image is played back, excluding the playback lock interval.

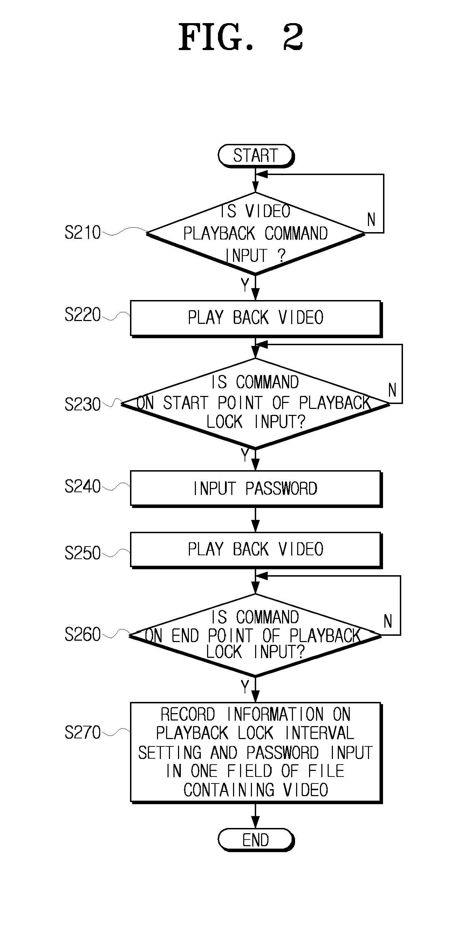

Hereinafter, a process for setting a playback lock interval will be described in more detail with reference to Figure 2. Figure 2 is a flowchart explaining a method for setting a playback lock interval of an image according to an exemplary embodiment of the present invention.

As can be seen, if an image playback command is input (S210-Y), the controller 180 controls the image device to play back an image (S220).

Specifically, if a user enters a command to play back the image stored in the file in the image provider 120 through the operator 170, the switch 130 performs the switching operation so that the image stored in the file can be output. The video output from the switch 130 is then sent to the A/V processor 135 to be processed. Next, the image signal is output through the display information combiner 140, image driver 145, and display 150, and the audio signal is output through the audio driver 160 and speaker 165.

The controller 180 determines whether a command relating to the start point of the playback lock is input (S230). Specifically, while a user views an image being played back, if it is determined that an image segment deemed inappropriate for a third party to view, the user enters the command relating to the start point of the playback lock of the inappropriate image using a button, included in the operator 170, for setting the start point of the playback lock, in which case the controller 180 determines that the command relating to the start point of the playback lock is input.

Upon determination that the command relating to the start point of the playback lock is entered (S230-Y), the controller 180 receives a password input by a user (S240). Specifically, if it is determined that the command relating to the start point of the playback lock is input, the controller 180 controls the display information combiner 140 and display 150 so that a message requesting that the password input be combined with the image being played back and the result be displayed. Accordingly, the user inputs the password through the operator 170, and thus, the controller 180 receives the password.

The controller 180 controls the image device to play back the image (S250).

The controller 180 determines whether a command relating to the end point of the playback lock is input (S260). Specifically, while a user views an image being played back, if it is determined that playback of the image segment deemed inappropriate for a third party to view is terminated, the user enters the command relating to the end point of the playback lock of the inappropriate image using a button, included in the operator 170, for setting the end point of the playback lock, in which case the controller 180 determines that the command relating to the end point of the playback lock is input.

Additionally, the controller 180 designates as a playback lock interval an interval corresponding to the segment from the start to the end of the playback lock of the played back image. Furthermore, information that the playback lock of an image is set, and information on the password input by the user are recorded in one field of the file containing the image (S270).

Accordingly, the playback lock interval of the image can be set. In Figure 2, there is only one playback lock interval, but the present invention is not limited thereto, and a plurality of playback lock intervals of image may exist.

Additionally, in the case of the plurality of playback lock intervals, a password can be individually input at the start point of the playback lock when setting the playback lock interval. Furthermore, the password input at the first start point of the playback lock may be used to set a next playback lock interval. Accordingly, in exemplary embodiments of the present invention, it is apparent that a user does not separately input the password at the start point of the playback lock after the second time.

The password is input at the start point of the playback lock in Figure 2, but the present invention is not limited thereto, and it is also natural to enter the password at the end point of the playback lock or other points. Additionally, if "Playback Lock Setting" is selected from a menu list of the image device, and a password is input, a user designates the start and the end points of the playback lock, so that the playback lock interval can be set.

In Figure 2, there is a need for a user to input a password in order to set the playback lock, in which case the password may contain not a combination of numbers, but a combination of numbers, letters or special characters, a combination of specific keys included in the operator, or a specific master key.

Additionally, the playback lock generally means that playback of video or audio signals is impeded. However, it is possible to hold up the playback of only one of video or audio signals.

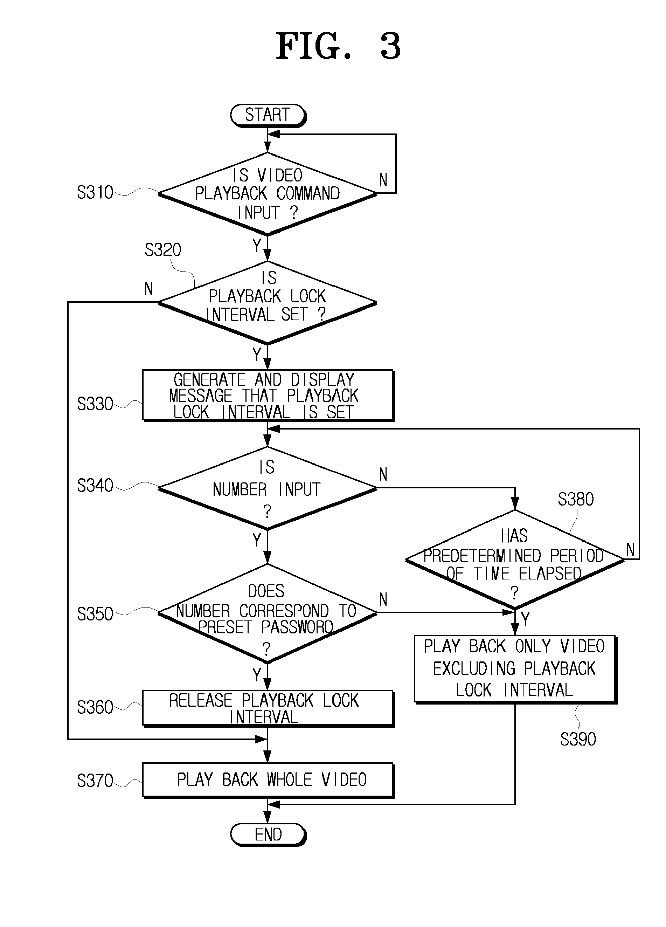

Hereinafter, a process for playing back a playback lock interval when the playback lock of the image is set will be described in more detail with reference to Figure 3. Figure 3 is a flowchart explaining a method for playing back the playback lock interval of the image according to an exemplary embodiment of the present invention.

As can be seen, if an image playback command is input (S310-Y), the controller 180 determines whether the playback lock interval is set in the image to be played back (S320).

Specifically, if the image playback command is entered through the operator 170, the controller 180 determines whether the playback lock interval set by a user is set based on information recorded in the file containing the image.

Upon determination that the playback lock interval is set (S320-Y), the controller 180 generates a message advising the playback lock interval is set, and controls the display information combiner 140 and display 150 to output the message (S330). Specifically, the controller 180 generates a message advising the playback lock interval is set, and outputs the message to the display information combiner 140. The display information combiner 140 combines the message output from the controller 180 with the image and outputs the result to the display 150, and the display 150 displays the message. The message advising the playback lock interval is set may comprise a message requesting that the password input.

The controller 180 determines whether a number is input (S340). In other words, the controller 180 determines whether the user enters a number through the operator 170 in order to play back an image corresponding to the playback lock interval.

If it is determined that a number is input (S340-Y), the controller 180 determines whether the input number corresponds to the preset password (S350). As shown in Figure 2, the preset password is the password input, on setting the playback lock interval of the image.

If it is determined that the input number corresponds to the preset password (S350-Y), the controller 180 releases the setting of the playback lock interval. This releasing the setting means that it is also possible to play back the playback lock interval, in the same manner as other parts of the image are played back.

The controller 180 controls the image device to play back the whole image, regardless of whether or not the image stored in the file corresponds to the playback lock interval (S370).

On the other hand, if it is determined that the input number does not correspond to the preset password (S350-N), the controller 180 controls the image device to play back the image excluding the playback lock interval (S390). In other words, the controller 180 reads out from the image provider 120 the file only the parts of the image not affected by the playback lock interval in sequence, and plays back the read image.

Additionally, if it is determined that a number is not input (S340-N), the controller 180 measures the time interval and determines whether the measured time interval exceeds a predetermined period of time, that is, whether the number is input within the predetermined period of time (S380).

Upon determination that the number is not input within the predetermined period of time (S380-Y), the controller 180 plays back only the parts of the image not affected by the playback lock interval, similarly to the situation where the input number does not correspond to the preset password.

According to the exemplary embodiment of the present invention as described above, whether the playback lock interval is set before the image is played back was determined, the message advising the playback lock interval is set was generated, and the message was displayed, but the present invention is not limited thereto. In other words, the controller 180 may determine whether the playback lock interval is set during the playback of an interval prior to the playback lock interval, and output the message to one field of the image being played back if the playback lock interval has been set.

Additionally, it is assumed that there is a single playback lock interval in the exemplary embodiment according to the present invention, but if a plurality of playback lock intervals exist, a password may be respectively input to release the locking of each interval, and the locking for the intervals subsequent to the first playback lock interval may be released if the password is input to release the setting of the first playback lock interval.

Furthermore, "Playback Lock Setting" is selected from the menu list of the image device and a password is input in order to release the playback lock, and accordingly the playback lock interval can be released.

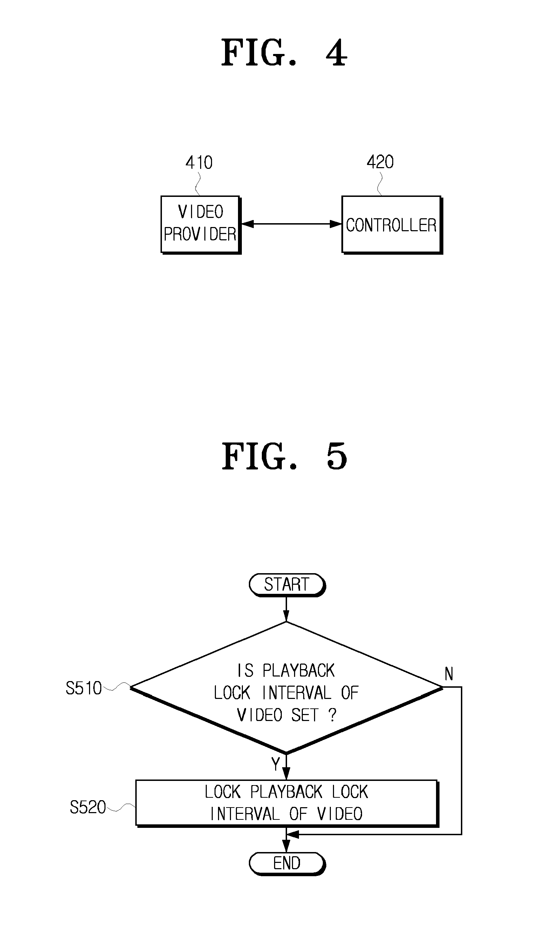

As described above, the methods for setting the playback lock interval of the image and playing back the playback lock interval were described according to the exemplary embodiment of the present invention. Hereinafter, another exemplary embodiment according to the present invention will be described in more detail with reference to Figures 4 and 5. Figure 4 is a block diagram of an image device according to another exemplary embodiment of the present invention, and Figure 5 is a flowchart explaining a method for playing back a playback lock interval of an image by the image device shown in Figure 4, according to another exemplary embodiment of the present invention.

As shown in Figure 4, the image device according to another exemplary embodiment of the present invention comprises an image provider 410 and a controller 420. The image provider 410 provides an image. If it is determined that the playback lock interval of the image provided by the image provider 410 is set, the controller 420 locks the playback lock interval of the image.

Specifically, as shown in Figure 5, the controller 420 determines whether the playback lock interval of the image to be played back in the image provider 410, which is set by a user, is set (S510). If it is determined that the playback lock is set (S510-Y), the controller 420 impedes the playback lock interval of the image (S520).

As the image device shown in Figure 1 is only an exemplary embodiment, not all blocks shown in Figure 1 need to be included in the image device according to the present invention, and unnecessary blocks can be omitted. For example, if the image device is a set-top box, the display 150 and speaker 165 may be omitted.

According to the present invention as described above, the image device displays the image excluding the playback lock interval, and thus the user can manage and view the image more efficiently.

According to the present invention, a substitute program may be played during the playback lock duration set by the user. The substitute program may be stored in the image device or may be received externally such as a broadcast program or other image storage device.

According to the present invention, even though the user has set the playback lock interval, the image device may be programmed to turn off the playback lock function upon user selection.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations falling within the scope of the claims will be apparent to those skilled in the art.

## Claims

1. An image device comprising:
an image provider (120) configured to provide an image; and
a controller (180) configured to inhibit playback of a portion of the image provided from the image provider (120), if it is determined that the portion has been set by a user to be a playback lock portion.

2. An image device as claimed in claim 1, wherein the image is a video image, and the playback lock portion is a playback lock time interval.

3. The apparatus as claimed in claim 1 or 2, wherein the controller (180) is configured to determine whether the portion has been set to be a playback lock portion, based on information recorded in a file containing the image.

4. The apparatus as claimed in any one of the preceding claims, wherein the controller (180) is configured to generate a message advising that the portion has been set to be a playback lock portion, if it is determined that the portion has been set to be a playback lock portion.

5. The apparatus as claimed in claim 4, further comprising an output unit configured to output the generated message.

6. The apparatus as claimed in claim 4 or 5, wherein the controller (180) is configured to control the display of the image, such that the image is displayed without the playback lock portion if a command is not input for a predetermined period of time or if a command is input which does not correspond to a command to release the preset playback lock.

7. The apparatus as claimed in claim 6, wherein the input command is a password

8. An image device comprising:
an image provider (120) configured to provide an image; and
a controller (180) configured to lock a portion of the image provided from the image provider (120), if a user input is received setting the portion to be a playback lock portion, wherein the locking causes playback of the playback lock portion to be inhibited.

9. An image device as claimed in claim 8, wherein the image is a video image, and the playback lock portion is a playback lock time interval.

10. The apparatus as claimed in claim 8 or 9, wherein the image is stored in a file storage (122) and the controller (180) is configured to determine whether the user input is received and record information in a field of a file.

11. The apparatus as claimed in claim 8, 9 or 10, wherein the controller (180) is configured to generate a message on receiving the user input, and request input of a password in order to set the portion to be a playback lock portion.

12. The apparatus as claimed in claim 9, wherein the controller (180) is configured to receive the user input setting the start and end points of the playback lock interval during playback of the video image.

13. A method for locking playback of an image, comprising:
determining whether a portion of an image to be played back has been set by a user to be a playback lock portion; and
inhibiting playback of portion if it is determined that the portion has been set to be a playback lock portion.

14. The method as claimed in claim 13, wherein the determining comprises determining whether the portion has been set to be a playback lock portion, based on information recorded in a file containing the image.

15. The method as claimed in claim 13 or 14, further comprising generating and outputting a message advising that the portion has been set to be a playback lock portion.

16. The method as claimed in any one of claims 13 to 15, comprising displaying the image without the playback lock portion, if a command is not input for a predetermined period of time or if a command is input which does not correspond to a command to release the preset playback lock.

17. The method as claimed in claim 16, wherein the input command comprises password input.

18. The method as claimed in any one of claims 13 to 17, comprising playing a substitute program during the playback lock interval.

19. A method for locking playback of an image, comprising:
receiving a user input; and
in response to the user input, setting a portion of the image to be played back as a playback lock portion.

20. The method as claimed in claim 19, wherein the image is stored in a file storage (122) and the setting comprises recording information indicating that the portion is a playback lock portion in a field of a file containing the image to be played back.

21. The method as claimed in claim 19 or 20, wherein a plurality of playback lock portions are set by the user.

22. The method as claimed in claim 21, wherein the user may set a different password for each of the playback lock portions.
